# FASCICULE DE BREVET EUROPEEN

(11) **EP 2 256 009 B1**
(45) Date de publication et mention de la délivrance du brevet: **10.07.2013**
(21) Numéro de dépôt: 10164183.5
(22) Date de dépôt: 27.05.2010
(51) Int. Cl.: B60T 1/06

(54) **Procédé de freinage en cas d'urgence d'un véhicule automobile**
PKW-Fahrzeugnotbremse
emergency brake for an automobile

(30) Priorité: 28.05.2009 FR 0953517
(43) Date de publication de la demande: 01.12.2010
(73) Titulaire: Peugeot Citroën Automobiles SA, 78140 Vélizy-Villacoublay (FR)
(72) Inventeur: Wascheul, Michael, 78260, Acheres (FR)

(56) Documents cités:
- DE-C- 708 872
- JP-A- 1 312 254
- US-A- 3 631 950
- US-A1- 2001 022 245

## Description

. La présente invention concerne un procédé de freinage en cas d'urgence d'un véhicule automobile. L'invention a notamment pour but de permettre un freinage du véhicule en cas de dysfonctionnement du système de freinage principal du véhicule.

. L'invention trouve une application particulièrement avantageuse pour les véhicules munis d'une boîte de vitesses manuelle pilotée équipée d'un organe de frottement permettant de transmettre du couple via le rapport de vitesse sur lequel est installé l'organe de frottement lors d'un changement de rapport de vitesse.

. Plus précisément, ce type de véhicule décrit dans la demande de brevet français numéro FR-0755178 comporte une chaîne de traction formée par un dispositif de propulsion (formé par un moteur thermique et/ou une machine électrique), un embrayage et une boîte de vitesses qui entraîne les roues du véhicule. L'embrayage est relié d'une part au dispositif de propulsion et d'autre part à la boîte de vitesses, elle-même reliée aux roues.

. La boîte de vitesses comporte un arbre primaire relié à l'embrayage et un arbre secondaire relié aux roues du véhicule via le rapport de différentiel, ces deux arbres étant reliés entre eux par l'intermédiaire d'engrenages formant les rapports de vitesse.

. Chaque engrenage comporte un pignon lié en rotation à un des arbres et un pignon fou monté sur l'autre arbre. Des manchons de crabotage sont utilisés pour lier sélectivement les pignons fous à l'arbre sur lequel ils sont montés afin d'assurer un changement de rapport de vitesse. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

. Par ailleurs, le dispositif de transmission comporte un organe de frottement capable d'égaliser les vitesses de rotation des arbres par frottement positionné sur le rapport final de démultiplication et/ou sur un rapport intermédiaire. L'organe de frottement est utilisé pour transmettre du couple par glissement lors des changements de rapports. Un tel dispositif est connu de DE 708872.

. Sur les véhicules montés en série, il n'existe généralement que deux systèmes de freinage :
- un système primaire de freinage hydraulique classique ou éventuellement électrique permettant de transformer l'appui sur la pédale en un effort de freinage sur les roues. Un système d'anti-blocage des roues permettant d'éviter le blocage des roues en contrôlant l'effort appliqué sur les étriers de frein peut être utilisé en combinaison avec le système primaire, et
- un système secondaire de freinage de type frein de parking permettant de bloquer le véhicule sur place. Ce système de freinage secondaire commandé manuellement ou automatiquement agit en général sur les deux roues arrière du véhicule.

. En cas de panne du système primaire de freinage, seul le système secondaire peut ralentir et stopper le véhicule. Toutefois les freinages d'urgence effectués à l'aide du système secondaire sont très longs et très difficiles à réaliser car le système secondaire qui agit sur les roues arrière du véhicule risque d'engendrer un tête à queue.

. L'invention part du principe qu'il est possible d'utiliser l'organe de frottement qui présente une capacité thermique très élevée en remplacement du système primaire de freinage en cas de freinage urgence.

. A cet effet, dès qu'une panne est détectée sur le circuit primaire de freinage, on engage un rapport différent de celui sur lequel est installé l'organe de frottement. De préférence, l'organe de frottement étant installé sur le plus grand rapport de vitesse, on engage le rapport directement inférieur à celui auquel est associé l'organe de frottement (cela revient à passer le rapport de 5^{ème} sur une boîte à 6 vitesses ou le rapport de 6^{ème} sur une boîte à 7 vitesses).

. En actionnant l'organe de frottement pour transmettre du couple aux roues, on se retrouve alors dans une situation où deux rapports de vitesse seraient engagés simultanément. Du fait des démultiplications différentes entre le rapport de vitesse engagé et le rapport auquel est associé l'organe de frottement, la chaîne de traction va se retrouver bloquer au moins partiellement et le véhicule va être freiné.

. Etant donné que l'organe de frottement est généralement asservi par une source hydraulique, il devient facile de le piloter par les informations reçues du système d'antiblocage des roues. Le freinage est ainsi beaucoup plus facile à contrôler qu'un freinage d'urgence effectué par le système de freinage secondaire.

. On remarque en outre que l'invention permet d'avoir une fonction supplémentaire de freinage d'urgence sans surcoût puisqu'on utilise l'architecture existante de la boîte de vitesses.

. L'invention concerne donc un procédé de freinage d'un véhicule automobile munie d'une boîte de vitesses comportant :
- un arbre primaire destiné à être relié à un dispositif de propulsion par l'intermédiaire d'au moins un embrayage, et au moins un arbre secondaire destiné à être relié aux roues du véhicule,
- ces deux arbres étant reliés entre eux par des engrenages formant les rapports de vitesse, ces engrenages comportant chacun un pignon solidaire en rotation d'un des arbres et un pignon fou monté sur l'autre arbre qui engrènent entre eux,
- des manchons de crabotage associables chacun à au moins un pignon fou, ces manchons de crabotage assurant le changement des rapports de vitesse, et
- un unique organe de frottement installé sur un des rapports apte à faire passer du couple par glissement via le rapport sur lequel il est installé lorsqu'il est actionné,
**caractérisé en ce que**, le véhicule étant en mouvement, il comporte les étapes suivantes :
- engager un rapport cible différent de celui sur lequel est installé l'organe de frottement, et
- activer l'organe de frottement pour transmettre du couple via le rapport sur lequel est installé l'organe de frottement en même temps que le rapport cible est engagé, de manière à engager deux rapports simultanément afin de freiner le véhicule.

. Selon une mise en oeuvre, l'organe de frottement étant installé sur le rapport de vitesse le plus élevé ou un rapport de vitesse intermédiaire, on engage le rapport cible directement inférieur au rapport sur lequel l'organe de frottement est installé.

. Le procédé selon l'invention peut être mis en oeuvre dans le cadre d'un freinage d'urgence du véhicule lorsqu'un système de freinage primaire permettant de transformer l'appui sur la pédale de frein en un effort de freinage est déficient.

. Selon une mise en oeuvre, l'organe de frottement étant asservi par un source hydraulique, cet organe de frottement est piloté par les informations reçues du système d'antiblocage des roues.

. Selon une mise en oeuvre, l'organe de frottement est un synchroniseur classique par exemple de type « Borg Warner » ou « New Process » (marques déposées) de grande capacité énergétique, ou un embrayage de type multicônes, multidisques, humide, ou même un embrayage sec.

. Selon une mise en oeuvre, les crabots des pignons fous présentent un profil auto-éjectant.

. Selon une mise en oeuvre, la boîte de vitesses présente 6 rapports de vitesse.

. L'invention sera mieux comprise à la lecture de la description qui suit et à l'examen des figures qui l'accompagnent. Ces figures ne sont données qu'à titre illustratif mais nullement limitatif de l'invention. Elles montrent :

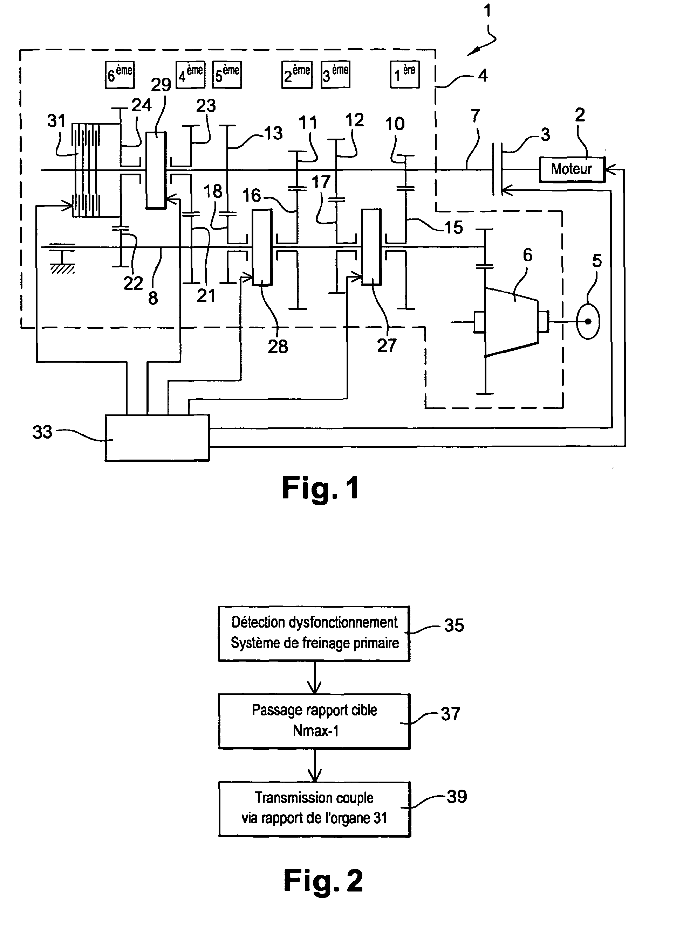

. Figure 1 : une représentation schématique d'un dispositif de transmission mettant en oeuvre le procédé selon l'invention ;

. Figure 2 : un diagramme des différentes étapes du procédé selon l'invention.

. Les éléments identiques conservent la même référence d'une figure à l'autre.

. La Figure 1 montre une chaîne 1 de traction d'un véhicule automobile formée par un moteur 2 thermique, un embrayage 3, une boîte 4 de vitesses délimitée par une ligne fermée discontinue, et des axes de sortie d'un différentiel 6 vers les roues 5. L'embrayage 3 est relié d'une part au moteur 2 thermique et d'autre part à la boîte 4 de vitesses. Le différentiel 6 assure la liaison entre l'arbre secondaire 8 et les roues 5 du véhicule.

. En variante, la chaîne 1 de traction est complétée par une machine électrique (non représentée) positionnée sur l'arbre 7 d'entrée de la boîte 4 de vitesses entre l'embrayage 3 et la boîte 4 de vitesses.

. Plus précisément, la boîte 4 de vitesses comporte un arbre 7 primaire relié à l'embrayage 3 et un arbre 8 secondaire relié aux roues 5. Ces deux arbres 7 et 8 sont reliés entre eux par l'intermédiaire d'engrenages formant les rapports de vitesse 1 à 6 encadrés sur la figure. Les rapports de 1^{ère}, 2^{ème}, 3^{ème} et 5^{ème} sont formés chacun par un pignon 10-13 entraîné par l'arbre 7 primaire et un pignon fou 15-18 relié à l'arbre 8 secondaire. Tandis que les rapports de 4^{ème} et 6^{ème} sont formés chacun par un pignon 21-22 entraîné par l'arbre 8 secondaire et un pignon fou 23-24 relié à l'arbre 7 primaire. En variante, les pignons fixes et les pignons fous de chaque rapport peuvent être installés indifféremment sur l'arbre primaire 7 ou secondaire 8 sans que cela ne modifie le fonctionnement de la boîte 4 de vitesses. Pour simplifier la représentation, le rapport de marche arrière n'a pas été représenté sur la figure.

. Les rapports de vitesses sont rassemblés par paire avec un seul manchon de crabotage 27-29 par paire, ces manchons 27-29 engageant l'un des deux pignons fous des engrenages par déplacement dans une direction et l'autre pignon par déplacement dans l'autre direction. En variante, on associe un manchon de crabotage à chaque rapport.

. Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5) comme représenté. Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}. Les crabots des pignons fous associés aux manchons de crabotage présentent de préférence un profil auto-éjectant, comme ceux décrits dans la demande de brevet français numéro FR-0755178. En variante, l'ordre des rapports peut bien entendu être différent de celui représenté et les manchons 37-39 de crabotage peuvent présenter un profil qui n'est pas auto-éjectant.

. En outre, un organe 31 de couplage par frottement, dit organe de frottement, est monté sur le rapport le plus élevé, ici le rapport de 6^{ème}. Cet organe 31 de frottement a pour rôle d'égaliser les vitesses lors des changements de rapports montants (autrement dit d'amener le manchon de crabotage et le pignon à engrener à des vitesses de rotation identiques avant de réaliser le crabotage) tout en permettant la transmission de couple lors de ces changements de rapport.

. L'organe 31 de frottement peut être par exemple un synchroniseur classique (par exemple de type « Borg Warner » ou « New Process » (marques déposées)) de grande capacité énergétique, mais aussi un embrayage de type multicônes, multidisques, humide, ou même un embrayage sec.

. Par ailleurs, un ou plusieurs calculateurs 33 assurent la commande du moteur 2, de l'embrayage 3, des manchons 27-29, et de l'organe 31 de frottement.

. En variante, on crée un rapport de démultiplication supplémentaire ne servant que pour la fonction de dérivation de couple et d'égalisation des vitesses lors du changement de rapport de vitesse.

. En variante, l'organe 31 est associé au rapport de 4^{ème} ou de 5^{ème}, ou tout autre rapport.

. En variante, la boîte 4 de vitesses comporte un deuxième arbre secondaire (non représenté), les paires de pignons formant les rapports étant alors réparties entre ces trois arbres.

. En variante, l'organe 31 est positionné sur un 3^{ème} arbre correspondant à celui de marche arrière, ce 3^{ème} arbre ne portant pas nécessairement les pignons fous de marche avant.

. Lors d'un passage d'un rapport N vers N+1, l'organe 31 de frottement transmet progressivement du couple par glissement (on utilise le fait que l'arbre 7 primaire lié au moteur 2 évolue à une vitesse de rotation plus importante que celui du pignon moteur du rapport final N+1) jusqu'à provoquer la chute du régime d'arbre 7 primaire.

. Cette chute de régime permet au rapport N d'être automatiquement désengagé de manière mécanique et d'engager le rapport N+1 alors que du couple est transmis par le rapport final. Dès que le rapport N+1 est engagé, l'organe 31 de frottement est progressivement désactivé et le couple est intégralement transmis par le rapport N+1.

. Le véhicule comporte en outre un système de freinage primaire hydraulique ou électrique (non représenté) permettant de transformer l'appui sur la pédale de frein en un effort de freinage.

. En cas de dysfonctionnement de ce système de freinage primaire détecté lors de l'étape référencée 35 alors que le véhicule est en mouvement, on met en oeuvre le procédé de freinage d'urgence selon l'invention. Le dysfonctionnement du système de freinage primaire hydraulique est par exemple mis en évidence lors de la détection d'une fuite du liquide de freinage.

. A cet effet, le véhicule comporte un capteur mesurant le niveau de liquide de frein installé par exemple sur le bouchon de remplissage du maître-cylindre de freinage. S'il y a une fuite dans le circuit de freinage, le niveau va fortement chuter ce qui va être détecté par le capteur de niveau et entraîner une panne. La détection de fuite ainsi faite va permettre à l'organe de frottement ayant sa propre alimentation hydraulique de prendre le relais pour réaliser le freinage d'urgence.

. Ainsi, une fois le dysfonctionnement détecté, on engage dans une étape 37 un rapport de vitesse cible différent du rapport sur lequel l'organe 31 de frottement est installé. De préférence, l'organe 31 de frottement étant installé sur le plus grand rapport du véhicule, on engage le rapport cible immédiatement inférieur à celui sur lequel est installé l'organe 31 de frottement. Par exemple, on engage le rapport de 5^{ème} en crabotant le manchon 28 avec le pignon fou 18 sur la boîte 4 de la Figure 1.

. Le rapport cible étant engagé, le calculateur 33 commande, dans une étape 39, l'organe 31 de frottement de manière à transmettre du couple par le rapport de 6^{ème}. On engage ainsi simultanément deux rapports ayant des démultiplications différentes (le rapport de 6^{ème} auquel l'organe 31 de frottement est associé et le rapport cible de 5^{ème} engagé par le manchon 28), ce qui permet de freiner le véhicule.

. Lorsque l'organe 31 de frottement est composé de cônes revêtus de carbone liés alternativement à l'arbre primaire 7 et au pignon fou 24 et aptes à entrer en frottement les uns contre les autres, il est possible de faire varier l'effort de frottement entre les cônes de l'organe 31 (autrement dit le couple qui passe par le rapport associé à l'organe 31) et en conséquence de moduler l'effort de freinage.

. L'organe 31 de frottement étant asservi par un source hydraulique s'il y a lieu indépendante du système de freinage, cet organe 31 de frottement peut être piloté par les informations reçues du système d'antiblocage des roues s'il y a lieu.

. En variante, le procédé de freinage selon l'invention est mis en oeuvre dans des situations de vie autres que les freinages d'urgence. Par exemple, lors d'une phase de freinage classique, le procédé selon l'invention est mis en oeuvre lorsqu'un système de freinage à disques présentent des disques trop usés afin d'éviter que le système de freinage ne se dégrade.

## Revendications

1. Procédé de freinage d'un véhicule automobile munie d'une boîte (4) de vitesses comportant :
- un arbre (7) primaire destiné à être relié à un dispositif (2) de propulsion par l'intermédiaire d'au moins un embrayage (3), et au moins un arbre (8) secondaire destiné à être relié aux roues (5) du véhicule,
- ces deux arbres (7, 8) étant reliés entre eux par des engrenages formant les rapports de vitesse, ces engrenages comportant chacun un pignon (10-12, 21, 22) solidaire en rotation d'un des arbres et un pignon fou (15-17, 23, 24) monté sur l'autre arbre qui engrènent entre eux,
- des manchons de crabotage (27-29) associables chacun à au moins un pignon fou, ces manchons de crabotage (27-29) assurant le changement des rapports de vitesse, et
- un unique organe (31) de frottement installé sur un des rapports apte à faire passer du couple par glissement via le rapport sur lequel il est installé lorsqu'il est actionné,
**caractérisé en ce que**, le véhicule étant en mouvement, il comporte les étapes suivantes :
- engager un rapport cible différent de celui sur lequel est installé l'organe (31) de frottement, et
- activer l'organe (31) de frottement pour transmettre du couple via le rapport sur lequel est installé l'organe (31) de frottement en même temps que le rapport cible est engagé, de manière à engager deux rapports simultanément afin de freiner le véhicule.

2. Procédé selon la revendication 1, **caractérisé en ce que** l'organe (31) de frottement étant installé sur le rapport de vitesse le plus élevé ou un rapport de vitesse intermédiaire, on engage le rapport cible directement inférieur au rapport sur lequel l'organe (31) de frottement est installé.

3. Procédé selon la revendication 1 ou 2, **caractérisé en ce qu'**il est mis en oeuvre dans le cadre d'un freinage d'urgence du véhicule lorsqu'un système de freinage primaire permettant de transformer l'appui sur la pédale de frein en un effort de freinage est déficient.

4. Procédé selon l'une des revendications 1 à 3, **caractérisé en ce que** l'organe (31) de frottement étant asservi par un source hydraulique, cet organe (31) de frottement est piloté par les informations reçues du système d'antiblocage des roues.

5. Procédé selon l'une des revendications 1 à 4, **caractérisé en ce que** l'organe (31) de frottement est un synchroniseur classique par exemple de type « Borg Warner » ou « New Process » (marques déposées) de grande capacité énergétique, ou un embrayage de type multicônes, multidisques, humide, ou même un embrayage sec.

6. Procédé selon l'une des revendications 1 à 5, **caractérisé en ce que** les crabots des pignons fous (15-17, 23, 24) présentent un profil auto-éjectant.

7. Procédé selon l'une des revendications 1 à 6, **caractérisé en ce que** la boîte (4) de vitesses présente 6 rapports de vitesse.

## Patentansprüche

1. Verfahren zum Bremsen eines Kraftfahrzeugs, das mit einem Schaltgetriebe (4) versehen ist, das Folgendes aufweist:
- eine Hauptwelle (7), die dazu bestimmt ist, mit einer Antriebsvorrichtung (2) über mindestens eine Kupplung (3) verbunden zu werden, und mindestens eine Nebenwelle (8), die dazu bestimmt ist, mit den Rädern (5) des Fahrzeugs verbunden zu werden,
- wobei diese zwei Wellen (7, 8) untereinander durch Radgetriebe verbunden sind, die die Schaltgänge bilden, wobei diese Radgetriebe jeweils ein Ritzel (10-12, 21, 22) aufweisen, das in Drehung fest mit einer der Wellen verbunden ist, und ein Losrad (15-17, 23, 24), das auf die andere Welle montiert ist, die ineinander eingreifen,
- Klauenkupplungsmuffen (27-29), die jeweils mindestens einem Losrad zugewiesen werden können, wobei diese Klauenkupplungsmuffen (27-29) den Wechsel der Gänge sicherstellen, und
- ein einziges Reibungsorgan (31), das auf einem der Gänge installiert ist, das geeignet ist, um Moment durch Rutschen über den Gang, auf dem es installiert ist, wenn es betätigt wird, zu übertragen,
**dadurch gekennzeichnet, dass** es, wenn das Fahrzeug in Bewegung ist, die folgenden Schritte aufweist:
- Einrücken eines Zielgangs, der von dem, auf dem das Reibungsorgan (31) installiert ist, unterschiedlich ist, und
- Aktivieren des Reibungsorgans (31), um Moment über den Gang, auf dem das Reibungsorgan (31) installiert ist, gleichzeitig mit dem Einrücken des Zielgangs derart zu übertragen, dass gleichzeitig zwei Gänge eingerückt werden, um das Fahrzeug zu bremsen.

2. Verfahren nach Anspruch 1, **dadurch gekennzeichnet, dass**, wenn das Reibungsorgan (31) auf dem höchsten Gang oder auf einem Zwischengang installiert ist, man den Zielgang direkt unterhalb des Gangs, auf dem das Reibungsorgan (31) installiert ist, einrückt.

3. Verfahren nach Anspruch 1 oder 2, **dadurch gekennzeichnet, dass** es im Rahmen einer Notbremsung des Fahrzeugs umgesetzt wird, wenn ein Hauptbremssystem, das es erlaubt, den Druck auf das Bremspedal in eine Bremskraft umzuwandeln, ausfällt.

4. Verfahren nach einem der Ansprüche 1 bis 3, **dadurch gekennzeichnet, dass** das Reibungsorgan (31) von einer hydraulischen Quelle gesteuert wird, wobei dieses Reibungsorgan (31) durch die Informationen gesteuert wird, die von dem Antiblockiersystem der Räder her empfangen werden.

5. Verfahren nach einem der Ansprüche 1 bis 4, **dadurch gekennzeichnet, dass** das Reibungsorgan (31) eine herkömmliche Synchronisierungskupplungsnabe ist, zum Beispiel des Typs "Borg Warner" oder "New Prozess" (eingetragene Warenzeichen) mit hoher Energiekapazität, oder eine Kupplung des Typs Mehrkegel-, Lamellen-, Nasskupplung oder sogar eine Trockenkupplung.

6. Verfahren nach einem der Ansprüche 1 bis 5, **dadurch gekennzeichnet, dass** die Klauen der Losräder (15-17, 23, 24) ein selbst auswerfendes Profil aufweisen.

7. Verfahren nach einem der Ansprüche 1 bis 6, **dadurch gekennzeichnet, dass** das Schaltgetriebe (4) 6 Gänge aufweist.

## Claims

1. A braking method of a motor vehicle provided with a gearbox (4) comprising:
- a main shaft (7) intended to be connected to a propulsion device (2) by means of at least one clutch (3), and at least a secondary shaft (8) intended to be connected to the wheels (5) of the vehicle,
- these two shafts (7, 8) being connected with one another by gears forming the gear ratios, these gears each comprising a pinion (10-12, 21, 22) integral in rotation with one of the shafts and an idling pinion (15-17, 23, 24) mounted on the other shaft, which mesh with one another,
- dog clutch sleeves (27-29) each able to be associated with at least one idling pinion, these dog clutch sleeves (27-29) ensuring the changing of the gear ratios, and
- a single friction member (31) installed on one of the ratios able to pass torque by sliding via the ratio on which it is installed when it is actuated,
**characterized in that**, with the vehicle being in motion, it comprises the following steps:
- engaging a target ratio different from that on which the friction member (31) is installed, and
- activating the friction member (31) to transmit torque via the ratio on which the friction member (31) is installed at the same time as the target ratio is engaged, so as to engage two ratios simultaneously so as to brake the vehicle.

2. The method according to Claim 1, **characterized in that** with the friction member (31) being installed on the highest gear ratio or an intermediate gear ratio, the target ratio is engaged directly lower than the ratio on which the friction member (31) is installed.

3. The method according to Claim 1 or 2, **characterized in that** it is implemented within the framework of an emergency braking of the vehicle when a primary braking system permitting the application on the brake pedal to be transformed into a braking force is deficient.

4. The method according to one of Claims 1 to 3, **characterized in that** with the friction member (31) being power-assisted by a hydraulic source, this friction member (31) is directed by information received from the anti-lock system of the wheels.

5. The method according to one of Claims 1 to 4, **characterized in that** the friction member (31) is a conventional synchroniser for example of the "Borg Warner" or "New Process" type (registered trademarks) of high energy capacity, or a clutch of the multi-cone, multi-disc, wet, type, or even a dry clutch.

6. The method according to one of Claims 1 to 5, **characterized in that** the dog-clutches of the idling pinions (15-17, 23, 24) have an auto-ejecting profile.

7. The method according to one of Claims 1 to 6, **characterized in that** the gearbox (4) has 6 gear ratios.
